(19) **Europäisches Patentamt**

**European Patent Office**

**Office européen des brevets**

(11) **EP 0 977 027 A2**

(12) **EUROPÄISCHE PATENTANMELDUNG**

(43) Veröffentlichungstag:
02.02.2000 Patentblatt 2000/05

(51) Int. Cl.⁷: **G01N 15/02**

(21) Anmeldenummer: **99114583.0**

(22) Anmeldetag: **26.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **31.07.1998 DE 19834583**

(71) Anmelder:
**Sivus Gesellschaft für Verfahrens-, Umwelt, und Sensortechnik gGmbH**
**09125 Chemnitz (DE)**

(72) Erfinder:
**Hädrich, Thomas, Dr. rer. nat.**
**07743 Jena (DE)**

(74) Vertreter:
**Körtel, Günther H., Dr.-Ing. Pat.-Ing.**
**Annaberger Strasse 240**
**09125 Chemnitz (DE)**

(54) **Verfahren und Anordnungen zur optischen Abstandsbestimmung von bewegten Partikeln in transparenten Medien**

(57) Die Erfindung betrifft ein Verfahren zur optischen Abstandsbestimmung von bewegten Partikeln in transparenten Medien, wobei die Partikel beim Hindurchbewegen durch ein Meßvolumen mittels Lichtquelle beleuchtet und deren Schattenbild bzw. das reflektierte Licht auf einem dem Meßvolumen benachbarten Ortsfrequenzfilter abgebildet wird, dessen Ausgangssignal hinsichtlich der dominierenden Frequenz zwecks Bestimmung der Partikelgeschwindigkeit ausgewertet wird, sowie Anordnungen zur Durchführung des Verfahrens.

Erfindungsgemäß wird die Partikel durch ein zweites beleuchtetes Meßvolumen hindurchbewegt, wobei das zweite Meßvolumen gleichfalls dem Ortsfrequenzfilter benachbart ist, jedoch unter einem Winkel zum ersten Meßvolumen steht und das beleuchtete zweite Meßvolumen vom beleuchteten ersten Meßvolumen unterscheidbar ist.

Anwendungsgebiete sind Untersuchungen insbesondere in Gas- und Flüssigkeitsströmungen, wie z.B. die Ermittlung des Geschwindigkeitsprofils in Grenzschichten.

Fig. 1

EP 0 977 027 A2

**Beschreibung**

Die Erfindung betrifft ein Verfahren zur optischen Abstandsbestimmung von bewegten Partikeln in transparenten Medien nach dem Oberbegriff des Patentanspruchs 1, sowie Anordnungen zur optischen Abstandsbestimmung von bewegten Partikeln in transparenten Medien nach den Oberbegriffen der Patentansprüche 8, 19 oder 20.

Anwendbar ist die Erfindung insbesondere zur Bestimmung des Abstandes von bewegten (festen, flüssigen oder gasförmigen) Teilchen in Gas- oder Flüssigkeitsströmungen bezüglich einer definierten Meßbasis, simultan zur Bestimmung ihrer Geschwindigkeit. Damit ist die Untersuchung des Verhaltens bewegter Teilchen in der Nahe von Wänden, z. B. beim pneumatischen Transport, möglich. So können Prozesse, wie Anlagerungen an und Ablösung von einer Wand und/oder der Wandstoß untersucht werden.

Weiterhin ist die Erfindung vorteilhaft anwendbar zur Ermittlung des Geschwindigkeitsprofils in Grenzschichten in Gas- und Flüssigkeitsströmungen, beispielsweise zur Untersuchung der Umströmung von Körpern, wie Tragflügel, Fahrzeuge, und der Strömungen an Wärmetauscherflächen. Dabei werden u. a. Erkenntnisse über die Auswirkungen mikroskopischer Störungen auf das Strömungsverhalten gesammelt.

Ein weiteres Anwendungsgebiet ist die Durchflußmengenmessung strömender Medien in offenen oder geschlossenen Leitungen.

Es ist bekannt (Damp, S.: "Einsatz eines modifizierten Miniatur-LDAs zur hochaufgelösten Grenzschichtmessung", 5.Fachtagung GALA, Berlin 1996), die Teilchengeschwindigkeit in Strömungen unter Verwendung eines miniaturisierten Laser-Doppler-Anemometers an verschiedenen Punkten (von Grenzschichten) zu vermessen, indem das Anemometer innerhalb eines eingeschränkten Verstellbereichs ferngesteuert traversiert wird.

Dieses Verfahren ist technisch kompliziert und aufwendig. Das entsprechend miniaturisierte Meßvolumen führt zu einer verringerten Datenrate mit allen negativen Folgen.

Aus der Literaturstelle Strunck, V., Dopheide, D.: „Ortsempfindliches Geschwindigkeits- und Teilchengrößen-LDA", 5.Fachtagung GALA, Berlin 1996, ist es des weiteren bekannt, durch Kombination von Laser-Doppler-Methoden mit Flugzeitverfahren gleichzeitig die Geschwindigkeit und den Ort eines Streuteilchens innerhalb eines Meßvolumens zu bestimmen. Dabei wird die Sendeoptik eines Kreuzstrahl-Laser-Doppler-Anemometers für ein Doppel-Referenzstrahl-Laser-Doppler-Anemometer verwendet, wobei in jedem Laserstrahl hinter dem Meßvolumen eine Fotodiode vorgesehen ist. Die Messung der Flugzeit eines Streuteilchens von einem Laserstrahl zum zweiten gestattet es (bei gleichzeitiger Messung der Geschwindigkeit), den Ortsdurchgang des Streuteilchens auf den optischen Achsen der Laserstrahlen zu bestimmen. Dazu werden die Ausgangssignale der Fotodiode bestimmungsgemäß ausgewertet.

Nach diesem Verfahren können vollständige Geschwindigkeitsprofile bestimmt werden, sofern die Teilchengröße geringer ist als der Interferenzstreifenabstand des verwendeten Anemometers. Darüber hinaus ist das Verfahren kompliziert und die erforderliche Gerätetechnik aufwendig und damit teuer. Der meßbare Abstand ist mit 5 mm eher gering, d.h. das Verfahren ist in seiner Anwendbarkeit eingeschränkt. Insbesondere treten bei geringen Wandabständen Rauschprobleme auf.

Weniger aufwendige Lösungen zur Messung der Geschwindigkeit bewegter Teilchen in Strömungen u. ä. stellen die Anwendungen der Ortsfrequenzfiltertechnik dar.

Bei einem Verfahren und einer Anordnung zur optischen Erfassung und Auswertung von Streulichtsignalen nach DE-OS 41 18 716 besteht das entsprechende Strichgitter-Anemometer aus einer Lichtquelle, mit der ein Meßvolumen, welches Partikeln enthält, beleuchtet wird. Deren emittiertes Streulicht wird über eine aus Linsen und Blende bestehende Optik auf einem Gitter abgebildet, dem ein Fotoempfänger nachgeordnet ist. Dessen Ausgangssignal dient durch Auswertung der Schwebungsfrequenz in Abhängigkeit von der Gitterkonstanten und des Abbildungsmaßstabs der Bestimmung der Partikelgeschwindigkeit.

Aus DD-PS 142 606 sind weiterhin ein Verfahren und eine Meßsonde bekannt, wobei (gleichfalls) ein optisches Ortsfrequenzfilter zur Messung der Geschwindigkeit von sich in Fluiden bewegenden Partikeln verwendet wird. Die Sonde besteht aus einer Lichtquelle und dem Ortsfrequenzfilter mit in einer optischen Wirkungsfläche mündenden gitterartig angeordneten Lichtleitfasern, die auf einen optoelektronischen Wandler und verstärkt auf einen Frequenzanalysator geführt sind.

Die beleuchteten Partikeln werden (ohne besondere Abbildungsoptik) durch Schattenprojektion auf das Ortsfrequenzfilter abgebildet bzw. durch Lichtreflexion an der Partikeloberfläche dem Ortsfrequenzfilter angezeigt. Die Frequenzanalyse des Ausgangssignals des Ortsfrequenzfilters liefert die Frequenz maximaler Leistung, woraus mit der Gitterkonstanten die Partikelgeschwindigkeit bestimmbar ist.

Eine entsprechende Anordnung ist u. a. in DE-PS 196 28 348 beschrieben.

Vorstehende bekannte Lösungen gestatten, insbesondere sofern keine Abbildungsoptik erforderlich ist, eine einfache und kostengünstige Möglichkeit zur Bestimmung der Geschwindigkeit von bewegten Partikeln in transparenten Medien, z. B. in Mehrphasenströmungen. Jedoch besteht bei diesen Lösungen, die die Ortsfrequenzfiltertechnik zur Partikelgeschwindigkeitsbestimmung nutzen, keine Möglichkeit, gleichzeitig den Abstand des (bewegten) Teilchens von einer definierten Meßbasis zu messen, so daß beispielsweise die Bestimmung von Geschwindigkeitsprofilen mit allen ihren Möglichkeiten nur mit erhöhtem Aufwand und erheblichen Fehlern durch Traversierung der Sonde durchführbar ist.

Der Erfindung liegt demgemäß die Aufgabe zugrunde, ein Verfahren und Anordnungen zur Durchführung des Verfahrens der eingangs genannten Art zu schaffen, wobei die Partikelgeschwindigkeitsbestimmung und die Bestimmung des Abstands der bewegten Partikeln von einer definierten Meßbasis gleichzeitig sowie einfach und ohne großen gerätetechnischen Aufwand, insbesondere ohne Traversierung einer Meßsonde, erfolgen kann.

Diese Aufgabe wird verfahrensgemäß durch die Merkmale des kennzeichnenden Teils des Patentanspruchs 1 gelöst, wobei vorteilhafte Ausgestaltungen und Anwendungen in den Unteransprüchen 2 bis 7 beschrieben sind . Die Aufgabe wird anordnungsgemäß durch die Merkmale des kennzeichnenden Teils des Patentanspruchs 8, 19 oder 20 gelöst. Vorteilhafte Aus- und Weiterbildungen sind in den Unteransprüchen 9 bis 18 oder 21 bis 24 beschrieben.

Das erfindungsgemäß ausgestaltete Verfahren und die erfindungsgemäß ausgestalteten Anordnungen gestatten die gleichzeitige Bestimmung der Partikelgeschwindigkeit (auf der Basis der technisch vorteilhaften Ortsfrequenzfiltermeßtechnik) und des Abstands der bewegten Partikeln von einer definierten Meßebene auf einfache Art und ohne großen gerätetechnischen Aufwand. Insbesondere erfolgt keine Störung einer Strömung, da keine Meßsonde in diese hineinragt und/oder (punktweise) traversiert werden muß. Der Einsatz bewegter Teile ist nicht erforderlich. Damit ist vorteilhaft und mit hoher Auflösung die Bestimmung kompletter Geschwindigkeitsprofile mit einem einzigen Meßvorgang möglich, wobei ein minimaler Wandabstand (der nur durch die Teilchengröße bestimmt ist) realisiert werden kann. D.h. auch bei wandnahen Messungen ist die Teilchengeschwindigkeit ohne störendes Rauschen bestimmbar, so daß insbesondere Grenzschichtprobleme einphasiger und auch disperser zweiphasiger Strömungen vorteilhaft untersucht werden können. Bei der Anwendung von erfindungsgemäßem Verfahren und Anordnung zur Durchflußmengenmessung befindet sich die Sonde nicht in der Strömung, so daß eine Störung der Strömung mit allen Folgen vermieden ist.

Die Merkmale der Unteransprüche ermöglichen eine vorteilhafte Ausgestaltung der Erfindung. So ist die Erfindung bei Einsatz unterschiedlicher Bauarten von Ortsfrequenzfiltern (optisches Strichgitter, CCD-Zeile, LCD-Array u. w.) realisierbar. Als besonders vorteilhaft hat sich der Einsatz faseroptischer Ortsfrequenzfilter bewährt, wobei ein Einfach-, besser jedoch ein Differenzgitter vorgesehen ist.
Sofern das Schattenbild der Partikeln ausgewertet wird, sind die Lichtquellen gegenüber der optischen Wirkungsfläche des Ortsfrequenzfilters angeordnet, so daß dazwischen die (beleuchteten) Meßvolumina eingeschlossen sind. Die den beiden Meßvolumina zugeordneten Lichtquellen sind bezüglich ihres Lichts voneinander unterscheidbar, um eine lichtquellenabhängige Auswertung des Ausgangssignals des Ortsfrequenzfilters zu ermöglichen. Demgemäß ist eine vorteilhaft gestaltete Trenneinrichtung für dessen Ausgangssignal vorgesehen.
In einer Variante ist jedoch eine Lichtquelle zwei optischen Wirkungsflächen von Ortsfrequenzfiltern zugeordnet, wobei eine Signaltrennung nicht erforderlich ist.

Wird das vom Partikel reflektierte Licht ausgewertet, so sind besonders zweckmäßig die Lichtquellen als Beleuchtungslichtleitfasern direkt in der optischen Wirkungsfläche des faseroptischen Ortsfrequenzfilters bzw. einer Ortsfrequenzfilteranordnung eingefügt, so daß sich gleichfalls die beleuchteten Meßvolumina vor dem Ortsfrequenzfilter bilden. Die Lichtleitfasern des Ortsfrequenzfilters verfügen zweckmäßigerweise über spezielle Raumfilterblenden, um den Lichtempfang aus zwei selektiven Richtungen (entsprechend der Meßvolumina) zu ermöglichen.

Nach DE-OS 195 02 993 ist es zwar im Zusammenhang mit der Anwendung der Mehrfachlichtschnitt-Technik bei der Geschwindigkeitsbestimmung von Tracerpartikeln durch Wegmessung mittels doppelt belichteten Bildern des Meßvolumens bereits bekannt, ein (flächenhaftes) Meßvolumen in mindestens zwei parallele, in der Abbildungsrichtung hintereinander angeordnete Teilvolumina aufzuteilen und diese mit voneinander unterscheidbarem Licht zu beleuchteten. Jedoch kann diesem Stand der Technik keine Anregung hinsichtlich der Erfindung entnommen werden, da ein völlig abweichendes Meßprinzip für die Teilchengeschwindigkeitsbestimmung zugrunde liegt und eine aufgabengemäße Teilchenabstandsbestimmung nicht vorgesehen ist.

Die Erfindung wird nachfolgend an mehreren Ausführungsbeispielen erläutert. In der zugehörigen Zeichnung zeigen:

Fig. 1    die schematische Ansicht einer erfindungsgemäßen Anordnung, wobei das Schattenbild von in einer Strömung enthaltenen Partikeln erfaßt wird,

Fig. 2    die vergrößerte Ansicht des Details „A" in Fig. 1,

Fig. 3    die schematische Ansicht einer Ausführungsvariante einer erfindungsgemäßen Anordnung,

Fig. 4    eine vergrößerte Ansicht analog zu Fig. 2 für den Fall der Erfassung des von Partikeln reflektierten Lichts,

Fig. 5    die Anwendung einer erfindungsgemäßen Anordnung zur Durchflußmengenmessung.

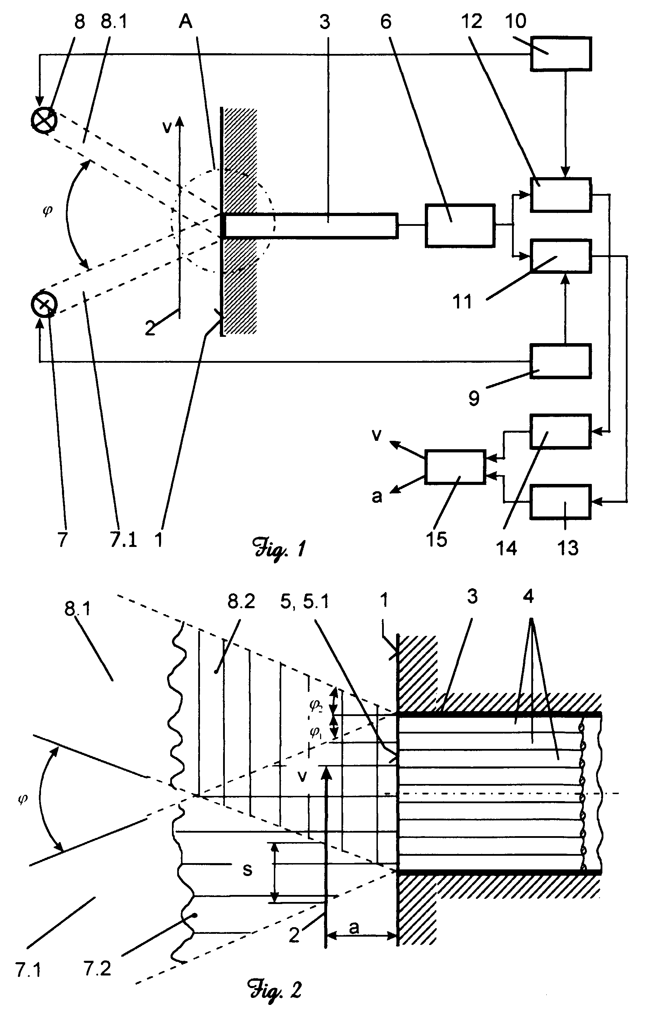

In einem ersten Ausführungsbeispiel (Fig. 1 und Fig. 2) wird zunächst die erfindungsgemäße Anordnung dargestellt. Anhand deren Arbeitsweise wird anschließend das erfindungsgemäße Verfahren erläutert.

Entlang einer Wand 1 (z. B. die Außenhaut eines Tragflügels, die Oberfläche eines Fahrzeug-Modells, die Oberfläche eines Wärmetauschers) bewege sich entsprechend dem Pfeil 2 eine Luftströmung, welche einzelne Partikeln enthält. Zwecks Bestimmung der Partikelgeschwindigkeit v und des Abstands a der jeweiligen Partikel zur Wand 1 ist in die Wand 1 an einer Meßstelle eine Meßsonde 3 eingefügt. Der Kopf der Meßsonde 3 besteht aus einem Rohr (siehe Fig. 2), in dem flexible Lichtleitfasern 4 linear entlang einer Gitterachse (welche parallel zum Pfeil 2 der Strömungsrichtung ausgerichtet ist) angeordnet sind. Die Stirnflächen der Lichtleitfasern 4 bilden die optische Wirkungsfläche 5.1 eines faseroptischen Ortsfrequenzfilters 5. Demgemäß sitzen sie bündig im Rohrende des Sondenkopfes und der gesamte Sondenkopf ist bündig in die Wand 1 eingefügt, so daß keine Störung der Strömung verursacht wird. Die der Meßstelle abgewandten Enden der Lichtleitfasern 4 sind auf einen optoelektronischen Wandler 6 geführt.

Der optischen Wirkungsfläche 5.1 des faseroptischen Ortsfrequenzfilters 5 gegenüber sind zwei Lichtquellen 7 und 8, im speziellen Ausführungsbeispiel Lichtemissionsdioden mit Projektionsoptik, zur Erzeugung jeweils eines parallelen Lichtbündels 7.1 und 8.1 angeordnet. Die ideellen Mittelpunkte der Lichtquellen 7, 8 liegen gemeinsam mit der Gitterachsrichtung des Ortsfrequenzfilters 5 in einer Ebene, d.h. sie bestimmen eine Trapezfläche, welche rechtwinklig zur optischen Wirkungsfläche 5.1 und damit zur Wand 1 im Bereich der Meßsonde 3 steht.

Die Lichtbündel 7.1, 8.1 schließen einen Winkel $\varphi$ ein, der die Summe aus dem Einfallswinkel $\varphi_1$ des Lichtbündels 7.1 und dem Einfallswinkel $\varphi_2$ des Lichtbündels 8.1 bezüglich der optischen Wirkungsfläche 5.1 ist.

Jedes Lichtbündel 7.1, 8.1 definiert vor der optischen Wirkungsfläche 5.1 des Ortsfrequenzfilters 5 ein (beleuchtetes) Meßvolumen 7.2, 8.2, welche sich teilweise überdecken und in Fig. 2 vereinfacht dargestellt sind. Durch beide Meßvolumina 7.2, 8.2 bewegen sich die Partikeln in der Strömung gemäß Pfeil 2 mit ihrer Geschwindigkeit v.

Um eine lichtquellenabhängige Auswertung des vom optoelektronischen Wandler 6 des Ortsfrequenzfilters 5 ausgegebenen Ausgangssignals zu ermöglichen, ist das Licht der beiden Lichtquellen 7, 8 voneinander unterscheidbar. Dieses kann u. a. durch unterschiedliche Farbe, Polarisation, Zeitmultiplexbetrieb oder - wie im vorliegenden Ausführungsbeispiel - durch eine unterschiedliche Modulation der Lichtquellen 7, 8 erfolgen. Dementsprechend erzeugen Frequenzgeneratoren 9, 10 unterschiedliche Modulationsfrequenzen, mit denen das Licht der Lichtquellen 7, 8 moduliert wird. Die entsprechenden Modulationsfrequenzen sind auf zwei dem optoelektronischen Wandler 6 zugeordnete Demodulatoren 11, 12 (als Trenneinrichtungen) geführt, deren Ausgangssignale über A/D-Wandler 13, 14 auf eine Auswerteelektronik 15 (z. B. ein Computer) geleitet sind.

Für den Fall, daß das Licht der Lichtquellen 7, 8 durch unterschiedliche Farbe unterscheidbar ist, ist als Trenneinrichtung für die erhaltenen Signale der Einsatz eines Farbtrennspiegels vorteilhaft. Bei verschieden polarisiertem Licht verwendet man zweckmäßigerweise zur Trennung der Signale Polarisationsfilter. Beim Einsatz eines Zeitmultiplexbetriebs zur Ansteuerung der Lichtquellen wird der optoelektronische Wandler zwecks Signaltrennung im gleichen Zeittakt wie die Lichtquellen angesteuert.

Die Arbeitsweise ist wie folgt:

Bei der Bewegung einer Partikel mit der Strömung parallel zur und entlang der Wand 1 gemäß Pfeil 2 wird im durch die Lichtquelle 7 mit einer ersten Modulationsfrequenz moduliert beleuchteten (ersten) Meßvolumen 7.2 ein Schattenbild der Partikel erzeugt, welches durch Parallelprojektion auf der optischen Wirkungsfläche 5.1 des Ortsfrequenzfilters 5.1 abgebildet wird. Das entsprechende Ausgangssignal des optoelektronischen Wandlers 6 liefert einen ersten zeitabhängigen Signalverlauf, der gemäß der ersten Modulationsfrequenz des Frequenzgenerators 9 moduliert ist. Im Demodulator 11 erfolgt die Trennung des ersten Signalverlaufs mit der ersten Trägerfrequenz. Bei Weiterbewegung der Partikel durchläuft diese auch das zweite Meßvolumen 8.2, welches durch die Lichtquelle 8 mit einer zweiten Modulationsfrequenz moduliert beleuchtet wird. Das betreffende Schattenbild der Partikel wird gleichfalls auf der optischen Wirkungsfläche 5.1 des Ortsfrequenzfilters 5 abgebildet und erzeugt im optoelektronischen Wandler 6 einen zweiten zeitabhängigen Signalverlauf, der zwar eine zum ersten Signalverlauf gleiche Frequenz aufweist, jedoch um die Zeit t zeitlich zum ersten Signalverlauf verschoben ist. Die Zeit t entspricht der Zeitdifferenz des Durchlaufens beider Meßvolumina 7.2, 8.2 auf dem Weg s durch die Partikel. Da der zweite Signalverlauf entsprechend der zweiten Modulationfrequenz moduliert ist, erfolgt dessen Demodulation im Demodulator 12.

Beide Signalverläufe werden über die A/D-Wandler 13, 14 digitalisiert und der Auswerteelektronik 15 zwecks Auswertung zugeführt. Dort erfolgt eine Kreuzkorrelation beider Signalverläufe. Ergebnis sind bei Auswertung der Periodenlänge die (dominierende) Frequenz der Signalverläufe, woraus durch Multiplikation mit der Gitterkonstanten des Ortsfrequenzfilters 5 die Partikelgeschwindigkeit v bestimmt wird, und bei Auswertung der Lage des Maximums der Kreuzkorrelationsfunktion die Zeitdifferenz t, um die der zweite zum ersten Signalverlauf verschoben ist. Mit dieser Zeitdifferenz t wird unter Verwendung der berechneten Partikelgeschwindigkeit v und des Winkels $\varphi = \varphi_1 + \varphi_2$ zwischen beiden Meßvolumina 7.2, 8.2 der Abstand a der Partikel von der Wand 1 nach folgender Beziehung bestimmt:

$$a = \frac{v \cdot t}{\tan\varphi_1 + \tan\varphi_2} \qquad (1)$$

Sofern beide Lichtquellen 7, 8 symmetrisch, d. h. unter gleichem Einfallswinkel $\varphi_1 = \varphi_2 = \varphi_0$ bezüglich der optischen Wirkungsfläche 5.1 des Ortsfrequenzfilters 5 angeordnet sind, bestimmt sich a aus:

$$a = \frac{v \cdot t}{2\tan\varphi_0} \qquad (2)$$

Aus der Folge der Hindurchbewegung der Partikel durch das erste Meßvolumen 7.2 und anschließend durch das zweite Meßvolumen 8.2 bzw. der umgekehrten Folge kann die Bewegungsrichtung des Teilchens abgeleitet werden.

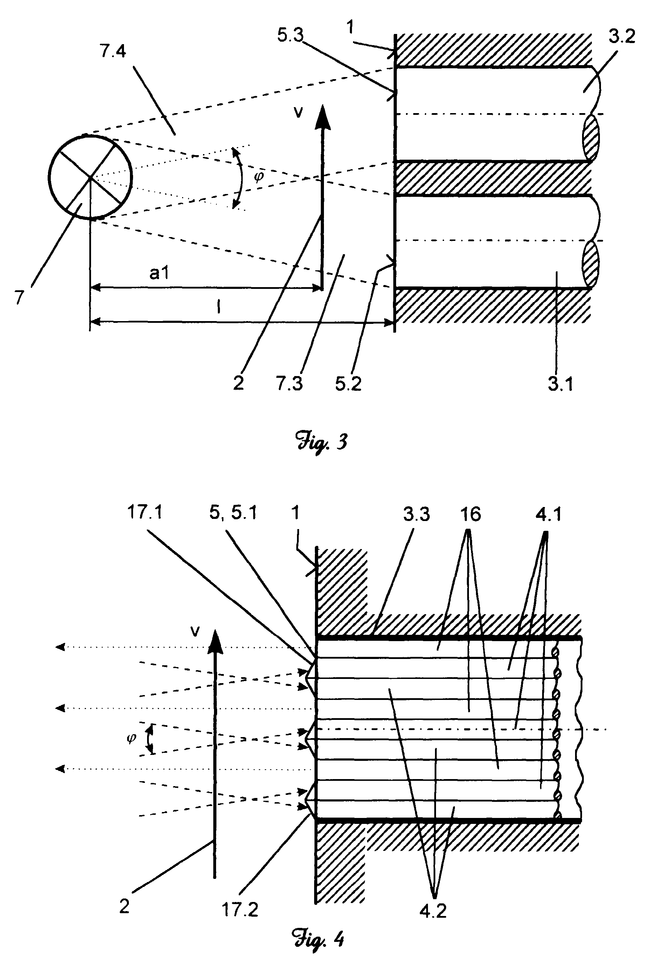

In einem zweiten Ausführungsbeispiel (Fig. 3) ist eine Ausführungsvariante dargestellt, nach der anstelle zweier Lichtquellen zwei Ortsfrequenzfilter 5.2, 5.3 in zwei Meßsonden 3.1, 3.2. einer Lichtquelle 7 zugeordnet sind. Deren ideeller Mittelpunkt liegt in einer Ebene mit der Gitterachsrichtung beider Ortsfrequenzfilter 5.2, 5.3. Dadurch wird eine Dreiecksfläche bestimmt, welche rechtwinklig zu den optischen Wirkungsflächen der Ortsfrequenzfilter und damit zur Wand 1 im Bereich der zwei Meßsonden 3.1, 3.2 steht. Die auf die Ortsfrequenzfilter 5.2, 5.3 bezogenen Lichtbündel 7.3, 7.4 schließen einem Winkel φ ein, der wiederum der Summe der einzelnen Einfallswinkel entspricht. Jedes Lichtbündel 7.3, 7.4 definiert analog zum ersten Ausführungsbeispiel ein beleuchtetes Meßvolumen, durch welches sich die Partikeln gemäß Pfeil 2 mit ihrer Geschwindigkeit v bewegen. Das jeweils auf die Ortsfrequenzfilter 5.2, 5.3 projizierte Schattenbild der Partikeln verursacht analog zum ersten Ausführungsbeispiel zwei Signalverläufe, mit deren Hilfe die Partikelgeschwindigkeit v und der Abstand a1 der Partikeln vom ideellen Mittelpunkt der Lichtquelle 7 bestimmbar sind. Infolge bekannten Lichtquellenabstands I zur Wand 1 ist der Wandabstand der Partikeln bestimmbar. Da die Signale der Ortsfrequenzfilter 5.2, 5.3 bereits getrennt vorliegen, ist hier eine Signaltrennung nicht erforderlich.

In einem dritten Ausführungsbeispiel (Fig. 4) wird das durch die Partikeln reflektierte Licht ausgewertet. Dementsprechend sind die im Kopf der Meßsonde 3 angeordneten Lichtleitfasern 4 des faseroptischen Ortsfrequenzfilters 5, wie im folgenden dargestellt, in ihren Austrittsflächen verändert und die gegenüber der optischen Wirkungsfläche 5.1 vorgesehenen Lichtquellen 7, 8 sind durch gleichseitig zur optischen Wirkungsfläche 5.1 angeordnete Lichtquellen ersetzt. Vorteilhaft sind diese als Beleuchtungslichtleitfasern 16 in die gitterartige Anordnung der Lichtleitfasern 4 einer Ortsfrequenzfilteranordnung eingefügt und mit einer externen Lichtquelle (nicht gezeichnet) verbunden. In einer nicht gezeichneten Variante sind zwei faseroptische Ortsfrequenzfilter nebeneinander vorgesehen, die das von der Partikel reflektierte Licht aus unterschiedlichen Richtungen empfangen. In einer zweiten Variante (siehe Fig. 4) sind die Lichtleitfasern 4 der Ortsfrequenzfilteranordnung in zwei Empfängergruppen 4.1, 4.2 aufgeteilt. Jede Empfängergruppe ist mit Raumfilterblenden versehen, die den Reflexionslichtempfang nur aus einer festgelegten Richtung gestatten. Im Ausführungsbeispiel sind die Raumfilterblenden durch Prismenaufsätze 17.1, 17.2 realisiert, deren Winkel durch den Refraktionswinkel zum Glas der Lichtleitfaser bestimmt ist. Statt der Prismenaufsätze 17.1, 17.2 kann jedoch auch ein schräger Anschliff verwirklicht werden. D.h. die Prismenaufsätze 17.1, 17.2 der zwei Empfängergruppen 4.1, 4.2 der Lichtleitfasern 4 ermöglichen den Empfang von Reflexionslicht aus zwei, den Winkel φ einschließenden Richtungen. Diese zwei Lichtempfangsrichtungen der entsprechend veränderten Meßsonde 3.3 definieren in diesem Ausführungsbeispiel die beiden beleuchteten Meßvolumina. Da bereits die Signale der Empfängergruppen 4.1, 4.2 der Lichtleitfasern 4 getrennt vorliegen, ist eine nachfolgende Signaltrennung unnötig. Im weiteren ist die Wirkungsweise der Bestimmung von Partikelgeschwindigkeit v und Abstand a analog zum ersten Ausführungsbeispiel, so daß auf weitere Erläuterungen verzichtet werden kann.

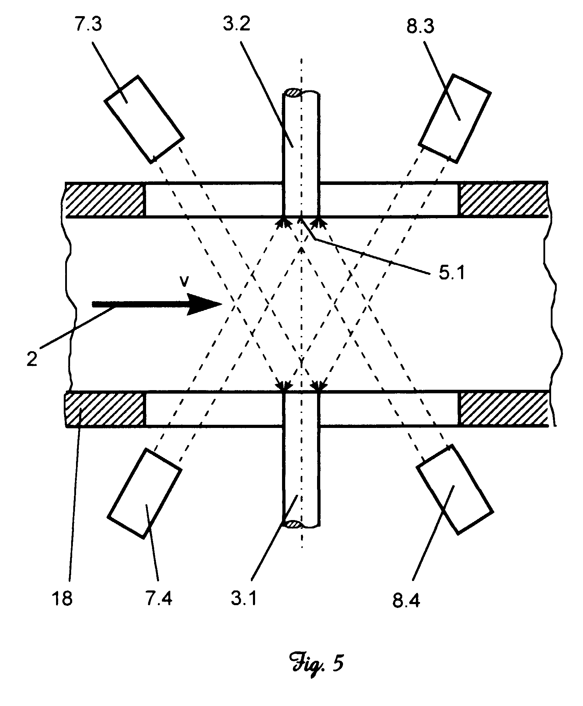

In einem vierten Ausführungsbeispiel (Fig. 5) ist die Anwendung der Erfindung zur Durchflußmengenmessung unter Anwendung des Verfahrens der Schattenbildprojektion der Partikeln dargestellt und beschrieben.

In einem Kanal befindet sich eine Strömung einer transparenten Flüssigkeit, von der Partikeln in Richtung des Pfeils 2 mitgerissen werden. An einer Meßstelle sind - zum Erreichen eines größeren Meßbereichs - zwei Meßsonden 3.1 und 3.2. gemäß dem ersten Ausführungsbeispiel, einander diametral gegenübersitzend, in der Wand 18 des Kanals bündig eingelassen, so daß eine Störung der Strömung nicht erfolgen kann. Jeder Meßsonde 3.1, 3.2 gegenübersitzend, sind in der zur jeweiligen optischen Wirkungsfläche 5.1 der Ortsfrequenzfilter der Meßsonden 3.1, 3.2 symmetrischen Anordnung jeweils zwei Lichtquellen 7.3, 8.3, 7.4, 8.4 hinter der an dieser Stelle transparenten Kanalwand 18 so befestigt, daß zwei Systeme entsprechend dem ersten Ausführungsbeispiel nach den Figuren 1 und 2 entstehen.

In dem ersten Ausführungsbeispiel entsprechender Wirkungsweise ist praktisch über die gesamte Kanalfläche punktweise die Partikelgeschwindigkeit v und die genaue Entfernung des jeweiligen Punktes von der Kanalwand bestimmbar, so daß eine Ermittlung des exakten Geschwindigkeitsprofils möglich ist. Durch Multiplikation mit der Kanalfläche an der Meßstelle ist die Durchflußmenge zu berechnen.

Die Erfindung ist auf vorstehende Ausführungsbeispiele beziehungsweise -varianten nicht beschränkt. Insbesondere ist die Erfindung mit den unterschiedlichsten Bauarten von Ortsfrequenzfiltern (z. B. optisches Strichgitter, CCD-Zeile usw.) realisierbar.

**Patentansprüche**

1. Verfahren zur optischen Abstandsbestimmung von bewegten Partikeln in transparenten Medien, wobei die Partikel beim Hindurchbewegen durch ein Meßvolumen mittels Lichtquelle beleuchtet und deren Schattenbild bzw. das reflektierte Licht auf einem dem Meßvolumen benachbarten Ortsfrequenzfilter abgebildet wird, dessen Ausgangssignal hinsichtlich der dominierenden Frequenz zwecks Bestimmung der Partikelgeschwindigkeit ausgewertet wird,
dadurch gekennzeichnet, daß die Partikel durch ein zweites beleuchtetes Meßvolumen (8.2) hindurchbewegt wird, wobei das zweite Meßvolumen (8.2) gleichfalls dem Ortsfrequenzfilter (5) benachbart ist, jedoch unter einem Winkel (φ) zum ersten Meßvolumen (7.2) steht und das beleuchtete zweite Meßvolumen (8.2) vom beleuchteten ersten Meßvolumen (7.2) unterscheidbar ist, und die simultane Abstandsbestimmung (a) der bewegten Partikel aus der Partikelgeschwindigkeit (v), dem Winkel (φ) zwischen beiden Meßvolumina (7.2; 8.2) und der Zeitdifferenz (t) des Durchlaufens beider Meßvolumina (7.2; 8.2) durch die Partikel nach folgender Beziehung bestimmt wird:

$$a = \frac{v \cdot t}{\tan\varphi_1 + \tan\varphi}$$

mit

$$\varphi = \varphi_1 + \varphi_2$$

2. Verfahren nach Anspruch 1, dadurch gekennzeichnet, daß aus der Folge der Hindurchbewegung der Partikel durch beide Meßvolumina (7.2; 8.2) deren Bewegungsrichtung abgeleitet wird.

3. Verfahren nach Anspruch 1, dadurch gekennzeichnet, daß die die Meßvolumina (7.2; 8.2) beleuchtenden Lichtquellen (7; 8) parallele Lichtbündel (7.1, 8.1) aussenden.

4. Verfahren nach Anspruch 1, dadurch gekennzeichnet, daß die Beleuchtung der beiden Meßvolumina (7.2; 8.2) hinsichtlich Farbe, Modulationsfrequenz, Polarisation, Zeittakt, Empfangsrichtung o. ä. des Lichts voneinander unterscheidbar ist.

5. Verfahren nach den Ansprüchen 1 bis 4, dadurch gekennzeichnet, daß Partikelgeschwindigkeits- (v) und Abstandsbestimmung (a) unter Verwendung des Kreuzkorrelations- oder des Kreuzspektrumsverfahrens erfolgen.

6. Verfahren nach den Ansprüchen 1 bis 5, gekennzeichnet durch die Anwendung zur Bestimmung von Geschwindigkeitsprofilen in strömenden Medien, insbesondere in deren Grenzschichten.

7. Verfahren nach den Ansprüchen 1 bis 5, gekennzeichnet durch die Anwendung zur Bestimmung der Durchflußmenge des Mediums in Leitungen mit offenem oder geschlossenem Querschnitt.

8. Anordnung zur optischen Abstandsbestimmung von bewegten Partikeln in transparenten Medien, wobei die Partikel beim Hindurchbewegen durch ein Meßvolumen mittels Lichtquelle beleuchtet und deren Schattenbild auf einem dem Meßvolumen benachbarten Ortsfrequenzfilter abgebildet wird, dessen Ausgangssignal hinsichtlich der dominierenden Frequenz zwecks Bestimmung der Partikelgeschwindigkeit ausgewertet wird,
dadurch gekennzeichnet, daß dem Ortsfrequenzfilter (5) zwei Lichtquellen (7; 8) zugeordnet sind, deren (ideelle) Mittelpunkte gemeinsam mit der Gitterachsrichtung des Ortsfrequenzfilters (5) in einer Ebene liegen und deren Lichtstrahlen (7.1; 8.1) parallel zu dieser Ebene und winklig zum Ortsfrequenzfilter (5) in den entsprechend gebildeten Meßvolumina (7.2; 8.2) verlaufen, wobei die Lichtquellen (7; 8) gegenseitig unterscheidbares Licht emittieren und das durch Schattenprojektion verursachte Ausgangssignal des Ortsfrequenzfilters (5) hinsichtlich der beiden Lichtquellen (7; 8) zwecks unterschiedlicher Auswertung mittels einer Trenneinrichtung trennbar ist, so daß lichtquellenabhängig die Partikelgeschwindigkeit (v) und der Abstand (a) bestimmbar sind.

9. Anordnung nach Anspruch 8, dadurch gekennzeichnet, daß die Lichtquellen (7; 8) parallele Lichtbündel (7.1; 8.1) erzeugen.

10. Anordnung nach Anspruch 8, dadurch gekennzeichnet, daß das Licht der beiden Lichtquellen (7; 8) hinsichtlich Farbe, Modulationsfrequenz, Polarisation, Zeittakt o. ä. voneinander unterscheidbar ist.

11. Anordnung nach den Ansprüchen 8 bis 10, dadurch gekennzeichnet, daß als Ortsfrequenzfilter (5) ein faseroptisches Ortsfrequenzfilter verwendet wird.

**12.** Anordnung nach den Ansprüchen 8 bis 10, dadurch gekennzeichnet, daß das Ortsfrequenzfilter (5) als Einfach- oder als Differenzgitter ausgeführt ist.

**13.** Anordnung nach den Ansprüchen 8 bis 12, dadurch gekennzeichnet, daß die beiden Lichtquellen (7; 8) dem Ortsfrequenzfilter (5) gegenüber angeordnet sind.

**14.** Anordnung nach Anspruch 13, dadurch gekennzeichnet, daß die Lichtquellen (7; 8) symmetrisch zur optischen Wirkungsfläche (5.1) des Ortsfrequenzfilters (5) angeordnet sind, so daß deren jeweiliger Einfallswinkel ($\varphi$1; $\varphi$2) gleich groß ist.

**15.** Anordnung nach Anspruch 8, dadurch gekennzeichnet, daß als Trenneinrichtung für ein lichtquellenabhängig mehrfarbiges optisches Ausgangssignal des Ortsfrequenzfilters (5) ein Farbtrennspiegel verwendet wird.

**16.** Anordnung nach Anspruch 8, dadurch gekennzeichnet, daß als Trenneinrichtung für ein lichtquellenabhängig polarisiertes optisches Ausgangssignal des Ortsfrequenzfilters (5) Polarisationsfilter verwendet werden.

**17.** Anordnung nach Anspruch 8, dadurch gekennzeichnet, daß als Trenneinrichtung für ein lichtquellenabhängig zeittaktgesteuertes elektronisches Ausgangssignal des Ortsfrequenzfilters (5) dessen optoelektronischer Wandler (6) durch einen Taktgeber im analogen Zeittakt wie die Lichtquellen (7; 8) angesteuert wird.

**18.** Anordnung nach Anspruch 8, dadurch gekennzeichnet, daß als Trenneinrichtung für ein lichtquellenabhängig moduliertes elektronisches Ausgangssignal des Ortsfrequenzfilters (5) dessen optoelektronischer Wandler (6) auf Demodulatoren (11; 12) geführt ist, welche auf den Modulationsfrequenzen arbeiten, mit denen die Lichtquellen (7; 8) moduliert werden.

**19.** Anordnung zur optischen Abstandsbestimmung von bewegten Partikeln in transparenten Medien, wobei die Partikel beim Hindurchbewegen durch ein Meßvolumen mittels Lichtquelle beleuchtet und deren Schattenbild auf einem dem Meßvolumen benachbarten Ortsfrequenzfilter abgebildet wird, dessen Ausgangssignal hinsichtlich der dominierenden Frequenz zwecks Bestimmung der Partikelgeschwindigkeit ausgewertet wird, dadurch gekennzeichnet, daß der Lichtquelle (7) zwei Ortsfrequenzfilter (5.2: 5.3) zugeordnet sind, wobei der ideelle Mittelpunkt der Lichtquelle (7) in einer Ebene mit der Gitterachsrichtung beider Ortsfrequenzfilter (5.2; 5.3) liegt und die Lichtstrahlen (7.3; 7.4) parallel zu dieser Ebene und winklig zu den Ortsfrequenzfiltern (5.2; 5.3) in den diesen zugeordneten Meßvolumina verlaufen, und das durch Schattenprojektion verursachte Ausgangssignal beider Ortsfrequenzfilter (5.2; 5.3) der Bestimmung der Partikelgeschwindigkeit (v) und des Abstands (a1) dient.

**20.** Anordnung zur optischen Abstandsbestimmung von bewegten Partikeln in transparenten Medien, wobei die Partikel beim Hindurchbewegen durch ein Meßvolumen mittels Lichtquelle beleuchtet und das reflektierte Licht auf einem dem Meßvolumen benachbarten Ortsfrequenzfilter abgebildet wird, dessen Ausgangssignal hinsichtlich der dominierenden Frequenz zwecks Bestimmung der Partikelgeschwindigkeit ausgewertet wird, dadurch gekennzeichnet, daß die Lichtquellen (16) im Ortsfrequenzfilter (5) bzw. in einer Ortsfrequenzfilteranordnung integriert und dem/den Ortsfrequenzfilter(n) (5) Raumfilterblenden (17.1; 17.2) zugeordnet sind, die den Lichtempfang aus zwei selektiven Richtungen, welche zwei Meßvolumina definieren, ermöglichen.

**21.** Anordnung nach Anspruch 20, dadurch gekennzeichnet, daß als Ortsfrequenzfilter (5) ein faseroptisches Ortsfrequenzfilter (5) verwendet wird.

**22.** Anordnung nach Anspruch 21, dadurch gekennzeichnet, daß das Ortsfrequenzfilter (5) als Einfach- oder als Differenzgitter ausgeführt ist.

**23.** Anordnung nach den Ansprüchen 20 bis 22, dadurch gekennzeichnet, daß als Raumfilterblenden den Enden der Lichtleitfasern (4.1; 4.2) Abbildungsoptiken, insbesondere Prismenaufsätze (17.1; 17.2) zugeordnet oder die Lichtleitfasern (4.1: 4.2) schräg angearbeitet sind.

**24.** Anordnung nach den Ansprüchen 20 bis 23, dadurch gekennzeichnet, daß im Ortsfrequenzfilter (5) Beleuchtungslichtleitfasern (16) eingefügt sind, welche mit einer externen Lichtquelle verbunden sind.

*Fig. 1*

*Fig. 2*

*Fig. 3*

*Fig. 4*

*Fig. 5*